## Europäisches Patentamt
## European Patent Office
## Office européen des brevets

(19)

(11) Numéro de publication: **0 261 118**

**B1**

(12)

# FASCICULE DE BREVET EUROPEEN

(45) Date de publication du fascicule du brevet: **16.01.91**

(51) Int. Cl.⁵: **B 60 C 23/04**

(21) Numéro de dépôt: **86903440.5**

(22) Date de dépôt: **20.06.86**

(86) Numéro de dépót international:
**PCT/FR86/00218**

(87) Numéro de publication internationale:
**WO 87/00129 15.01.87 Gazette 87/01**

(54) **ALIMENTATION EN ENERGIE ELECTRIQUE DE CIRCUITS SUR LA ROUE POUR UN DISPOSITIF DE SURVEILLANCE DES PNEUMATIQUES.**

(30) Priorité: **03.07.85 FR 8510516**

(43) Date de publication de la demande:
**30.03.88 Bulletin 88/13**

(45) Mention de la délivrance du brevet:
**16.01.91 Bulletin 91/03**

(84) Etats contractants désignés:
**AT BE CH DE FR GB IT LI LU NL SE**

(56) Documents cités:
**EP-A-0 016 991**
**EP-A-0 045 401**

(73) Titulaire: **MICHELIN & CIE (Compagnie Générale des Etablissements Michelin) Société dite:**
**4 rue du Terrail**
**F-63000 Clermont-Ferrand (FR)**

(72) Inventeur: **DOSJOUB, André**
**2, rue du Traversin**
**F-63400 Chamalières (FR)**
Inventeur: **MYATT, David**
**9, rue des Muscades**
**Pompignat F-63100 Chateaugay (FR)**

(74) Mandataire: **Renaudie, Jacques**
**Michelin & Cie Service K. Brevets**
**F-63040 Clermont-Ferrand Cédex (FR)**

EP 0 261 118 B1

Courier Press, Leamington Spa, England.

**Description**

La présente invention concerne les dispositifs de surveillance de l'état de pneumatiques. Plus particulièrement, elle se rapporte aux systèmes, d'alimentation en énergie des différents étages de ceux de ces dispositifs qui disposent d'une réserve d'énergie électrique sur la roue.

Le comportement d'un pneumatique est complexe; on ne peut en réduire la surveillance à la simple détection d'un ou de plusieurs seuils. Il importe donc de pouvoir transmettre la mesure d'une ou de plusieurs grandeurs observées sur la roue, mobile en rotation, vers le châssis du véhicule et ce, de préférence pour toute position angulaire de la roue. Lorsque l'on utilise des composants actifs sur la roue pour effectuer les mesures nécessaires, il est indispensable de prévoir une alimentation en énergie sur la roue. L'énergie requise peut être fournie soit par une pile, soit par un condensateur de capacité suffisante, chargé par tout moyen approprié. On trouve un exemple d'utilisation d'une pile dans le dispositif de surveillance de pneumatiques proposé par la demande de brevet FR—A—2 529 513. On trouve une exemple de charge de condensateur dans le brevet EP—A—0 045 401 où l'énergie électrique est transmise depuis le châssis vers la roue par couplage inductif entre deux bobines fixées l'une au châssis, l'autre à la roue.

Dans un dispositif de surveillance de pneumatiques du type comportant des composants actifs, on peut distinguer sur la roue un étage de stockage de l'énergie (pile ou condensateur avec ses moyens de charge), un étage convertisseur chargé de transformer la valeur des grandeurs mesurées en signal électrique, et une étage de transmission dudit signal. Cet étage de transmission est un étage de puissance par comparaison avec l'étage convertisseur, c'est-à-dire un étage utilisant une énergie électrique suffisamment importante pour assurer la transmission dudit signal de la roue vers le châssis en général par couplage inductif.

Quel que soit le sytème de stockage de l'énergie employé, il importe de minimiser autant que possible la consommation d'énergie électrique sur la roue. Cela est important si l'on a prévu une alimentation par pile, pour éviter de devoir la remplacer prématurément, et cela devient tout à fait crucial si le dispositif puise son énergie dans un condensateur. Les précautions classiques utilisées jusqu'à présent se limitent la plupart du temps à utiliser des composants à faible consommation d'energie, par exemple en technologie CMOS.

Le but de la présente invention est d'assurer une utilisation aussi rationnelle que possible de l'énergie disponible sur la roue.

Un premier objectif de l'invention est de permettre une charge optimale et aussi rapide que possible d'un condensateur jouant le rôle de réservoir d'énergie lorsqu'il est chargé par de l'énergie électrique envoyée depuis le châssis du véhicule vers la roue par couplage inductif.

Selon l'invention, le système d'alimentation en énergie des circuits électriques fixés à la roue dans un dispositif de surveillance de pneumatiques d'un véhicule, la transmission d'énergie depuis le châssis du véhicule vers la roue étant réalisée par couplage inductif entre deux bobines, l'une liée au châssis, l'autre à la roue, le stockage de l'énergie étant réalisé par au moins un condensateur alimenté par la bobine liée à la roue via un redresseur, ledit condensateur alimentant en énergie lesdits circuits électriques, est caractérisé en ce qu'il comporte des moyens permettant de déconnecter lesdits circuits électriques pendant la phase de transmission et de stockage d'énergie dans le condensateur, depuis le châssis vers la roue.

Dans un second objectif de l'invention, quel que soit le moyen de stockage de l'énergie électrique, mais dans le cas où le signal à transmettre est impulsionnel, on cherche à assurer la transmission dudit signal en consommant un minimum d'énergie. On entend par "signal impulsionnel" une onde rectangulaire dont les "paramètres" portant les mesures des granduers observées sont la largeur de la période pendant laquelle ce signal est à l'état haut, et la largeur de la période pendant laquelle ce signal est à l'état bas, ou bien encore l'une de ces deux largeurs et le rapport cyclique du signal.

Selon l'invention, le système d'alimentation en énergie de la bobine fixée à la roue dans un dispositif de surveillance de pneumatiques d'un véhicule, l'énergie électrique nécessaire étant accumulée par des moyens de stockage, le dispositif de surveillance comportant un étage convertisseur servant à la détection et au codage sous forme d'un signal impulsionnel de la valeur d'au moins une grandeur mesurée, le dispositif comportant en outre un étage de transmission dudit signal impulsionnel basé sur le couplage inductif entre deux bobines fixées l'une à la roue, l'autre au châssis du véhicule est caractérisé en ce que l'étage de transmission comporte des moyens pour connecter lesdits moyens de stockage à la bobine solidaire de la roue lorsque ledit signal impulsionnel présente un front montant ou un front descendant et déconnecter lesdits moyens de stockage à tout autre moment.

Les dessins annexés permettent de mieux comprendre l'invention et d'en saisir tous les avantages.

La figure 1 schématise l'implantation d'un dispositif de surveillance de pneumatiques.

La figure 2 montre un schéma synoptique d'une mise en oeuvre de l'invention.

Les figures 2a à 2d montrent les chronogrammes des principaux signaux expliquant le fonctionnement du circuit de la figure 2.

La figure 3 montre une variante de réalisation du circuit représenté à la figure 2.

La figure 4 montre un schéma synoptique d'une autre mise en oeuvre de l'invention.

Les figures 4a à 4e donnent les chronogrammes des principaux signaux expliquant le fonctionnement du circuit de la figure 4.

La figure 5 montre une variante de réalisation du circuit représenté à la figure 4.

Les figures 5a à 5d donnent les chronogrammes des principaux signaux expliquant le fonctionnement du circuit représenté à la figure 5.

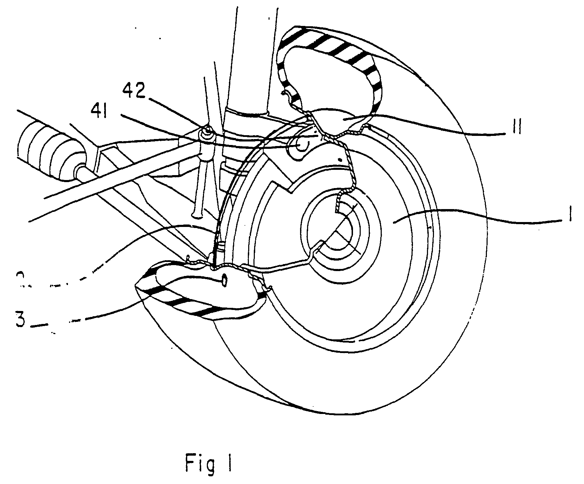

La figure 1 illustre de manière non limitative l'implantation des éléments d'un dispositif de surveillance où l'on a prévu sur la roue 1 une bobine 2 concentrique à celle-ci, un ensemble disposé dans un boîtier 3 comprenant au moins un condensateur pour accumuler de l'énergie électrique transmise depuis le châssis du véhicule par couplage inductif, un étage convertisseur, un étage de transmission connecté à la même bobine. Sur la partie non mobile en rotation, on peut trouver soit une seule bobine servant à la fois à la transmission d'énergie électrique vers la roue et à la réception du signal codé reçu de la roue, soit deux bobines, l'une 41 servant à la transmission d'énergie, l'autre 42 à la réception du signal. Les tolérances de positionnement desdites bobines sont assez larges. Cependant, il est indispensable que la bobine 2 soit concentrique à la roue 1 pour que le couplage ne soit pas fonction de la position angulaire de ladite roue 1.

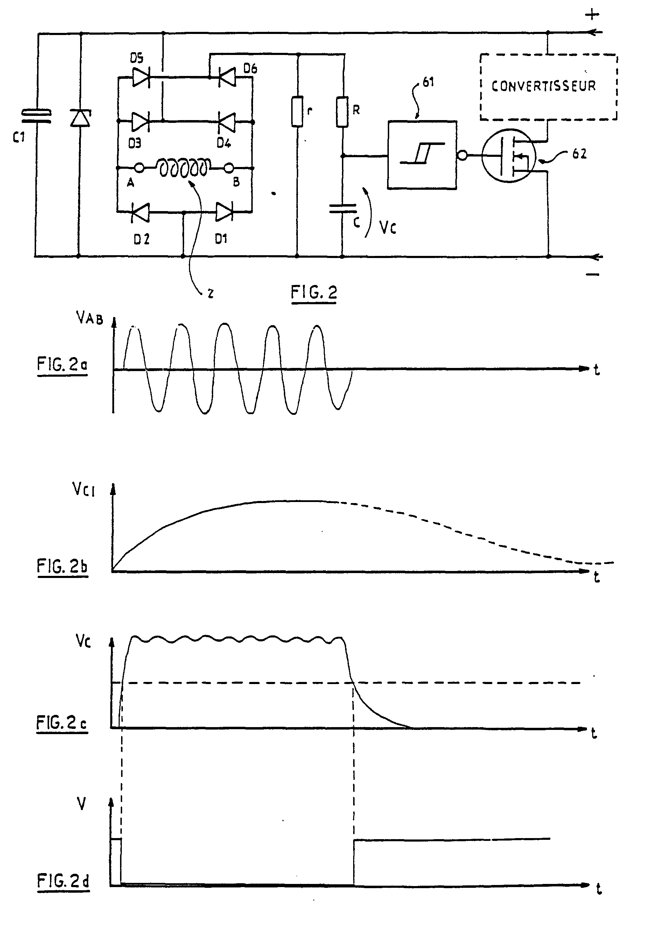

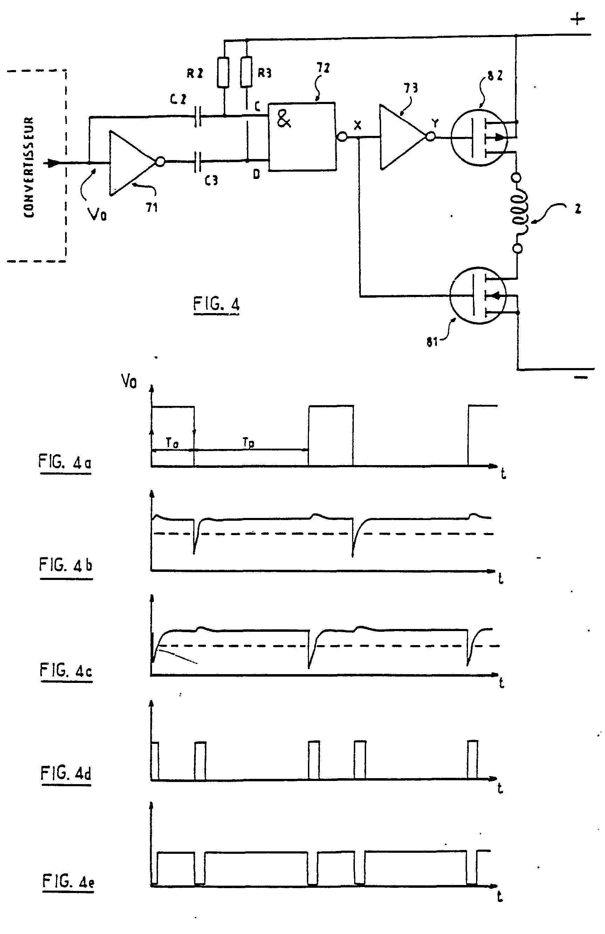

A la figure 2, on voit la bobine 2 connectée entre les points A et B, un premier dont redresseur $D_1$, $D_2$, $D_3$ et $D_4$, une diode zéner et un condensateur $C_1$ de capacité importante, par exemple 100 μF, destiné à servir de réservoir d'énergie électrique. Le pont redresseur $D_1$, $D_2$, $D_5$ et $D_6$ alimente une branche de circuit RC à très faible constante de temps, par comparaison à la constante de temps de charge du condensateur $C_1$. Une branche comportant la résistance r permet la décharge du condensateur C de la branche de circuit RC. Un comparateur 61 permet de détecter l'état de charge ou de décharge du condensateur C. Le comparateur actionne des moyens formant interrupteur, par exemple un transistor à effet de champ 62 pour connecter ou déconnecter les circuits électriques disposés dans la roue. Dans cet exemple, lesdits circuits comportent un circuit de codage délivrant un signal impulsionnel formant étage convertisseur tel que celui décrit dans la demande de brevet FRA—2 584 344, déposée par la demanderesse. On peut ensuite trouver une étage de transmission du signal impulsionnel tel que celui schématisé à la figure 4.

La figure 2a montre le signal $V_{AB}$ disponible aux bornes de la bobine 2. Il s'agit par exemple d'un signal sinusoïdal à 20 kHz. La figure 2b montre la tension $V_{C1}$ disponible aux bornes du condensateur $C_1$ après redressement et écrêtage par la diode zéner. La figure 2c montre la tension $V_C$ observée par le comparateur 61. Le circuit RC se caractérise par une faible constante du temps, et l'onde électrique a un fort taux d'ondulation. Par le comparateur 61, on repère le dépassement par la tension $V_C$ d'un certain seuil, ce qui permet de rendre bloquant le transistor à effet de champ 62 (en substitution, on peut utiliser un transistor bipolaire) pendant la phase de charge du condensateur $C_1$ (Figure 2d). Grâce à ce système d'alimentation, on évite de consommer de l'énergie électrique dans les circuits de roue pendant la phase de transmission d'énergie. En effet, il est plus facile d'exploiter le signal impulsionnel reçu pendant une période où l'on ne transmet pas d'énergie car ainsi on évite la superpositon des signaux électriques. Si l'on n'exploite pas le signal impulsionnel porteur des mesures pendant la transmission d'énergie, l'énergie consommée par un circuit de codage et un étage de transmission le serait en pure perte, ce qui retarderait inutilement le moment où le condensateur $C_1$ atteindrait une charge maximale.

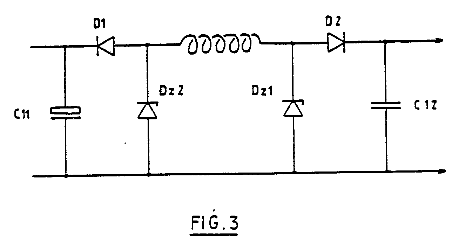

On a représenté à la figure 3 une variante de réalisation du circuit précédemment décrit, où l'on stocke l'énergie électrique sur 2 condensateurs: l'une $C_{11}$ (de capacité importante, par exemple de quelques dizaines de μF) destiné à alimenter les composants analogiques du circuit électrique monté sur la roue, et l'autre $C_{12}$ (d'une capacité de l'ordre du nF, ce qui en assure la charge rapide) est destiné à alimenter le ou les étages logiques assurant le pilotage dudit circuit e'lectrique. La charge du condensateur $C_{11}$ est assurée par un redressement simple alternance grâce à la diode $D_1$ et à la diode zéner $D_{Z1}$. De même, la charge du condensateur $C_{12}$ est assurée par la diode $D_2$ et la diode zéner $D_{Z2}$. L'écrêtage de la tension de chacun des condensateurs $C_{11}$ et $C_{12}$ est assuré par la diode zéner du redresseur chargeant l'autre condensateur, respectivement par $D_{Z2}$ et $D_{Z1}$. La détection de la phase de transmission d'énergie se fait d'une manière similaire à ce qui a été décrit ci-dessus et il est inutile d'en reprendre la description.

Une autre application de ce principe de suppression de toute consommation d'énergie inutile se trouve concrétisée dans le sytème d'alimentation de l'étage de transmission illustré par la figure 4. L'étage convertisseur est connecté à une branche $R_2 C_2$ ainsi qu'à un inverseur 71, lui-même connecté à une branche $R_3 C_3$. Une porte "NON ET" 72 reçoit les signaux disponibles aux points C (figure 4b) et D (figure 4c), ces signaux étant respectivement la dérivée du signal impulsionnel $V_0$ délivré par le convertisseur (voir fig. 4a) et la dérivée du signal impulsionnel inversé, toutes deux décalées selon l'axe des ordonnées de la valeur de la tension d'alimentation. Les pics tendant à dépasser la tension d'alimentation sont toutefois écrêtés par la diode zéner (voir Fig. 2). Les traits interrompus aux figures 4b et 4c représentent le niveau de détection par la porte "NON ET" 72. La porte "NON ET" 72 délivre un signal de commande de moyens formant interrupteur pour connecter et déconnecter la bobine 2 au moyen de stockage de l'énergie électrique, à savoir une pile ou comme dans cet exemple, un condensateur. Lesdits moyens formant interrupteur peuvent être constitués par des transistors à effet de champ dont l'un 81 est commandé par le signal de sortie de la porte "NON ET" (figure 4d), et l'autre 82, par ce méme signal inversé (figure 4e) par l'inverseur 73. On peut également employer des transistors bipolaires.

Dans la configuration décrite à la figure 2, les

diodes de redressement $D_1$, $D_2$, $D_3$, $D_4$ constituent aussi, avec le condensateur $C_1$ et la diode zéner (voir figure 2), un moyen de suppression des surtensions lors de l'interruption du courant dans la bobine 2.

Le signal impulsionnel $V_o$ porte, sous forme codée, la valeur de la ou des grandeurs mesurées dans le pneu. Dans le cas où l'étage convertisseur est un circuit de codage selon la demande de brevet FR—A—2 584 344, la température est représentée par la largeur d'impulsion ($T = K_1 T_0$) et la pression par le rapport cyclique

$$(p = K_2 \ \frac{T_0}{T_P})$$

Il faut donc mesurer des intervalles de temps. Il suiffit donc de transmettre, de la roue vers le châssis, la position des fronts montants et celle des fronts descendants. En prenant les mesures convenables pour que la période $T_P$ soit toujours plus grande que la période $T_0$, le décodeur sur le véhicule peut se synchroniser même si la position de chaque front est transmise de la même manière. C'est pourquoi le sytème d'alimentation en énergie selon l'invention prévoit de connecter le condensateur à la bobine juste le temps qu'il faut pour transmettre la position de chaque front du signal $V._o$. Ainsi, cet étage de transmission qui doit faire apparaître aux bornes de la bobine 2 une onde électrique de puissance importante pour que le signal codé puisse être induit à un niveau suffisant dans la bobine 42 liée aui châssis du véhicule, atteint ce but en consommant un minimum d'énergie: il n'y a consommation importante qu'à chaque occurence d'un front et non pas pendant toute la durée de la période $T_0$. Puisque les impulsions transmises sont toutes de même polarité, elles seront détectées au niveau du décodeur sur le véhicule par le même composant électronique. On évite donc l'influence perturbatrice des dispersions de fabrication, ce qui constitue un autre avantage du sytème selon l'invention.

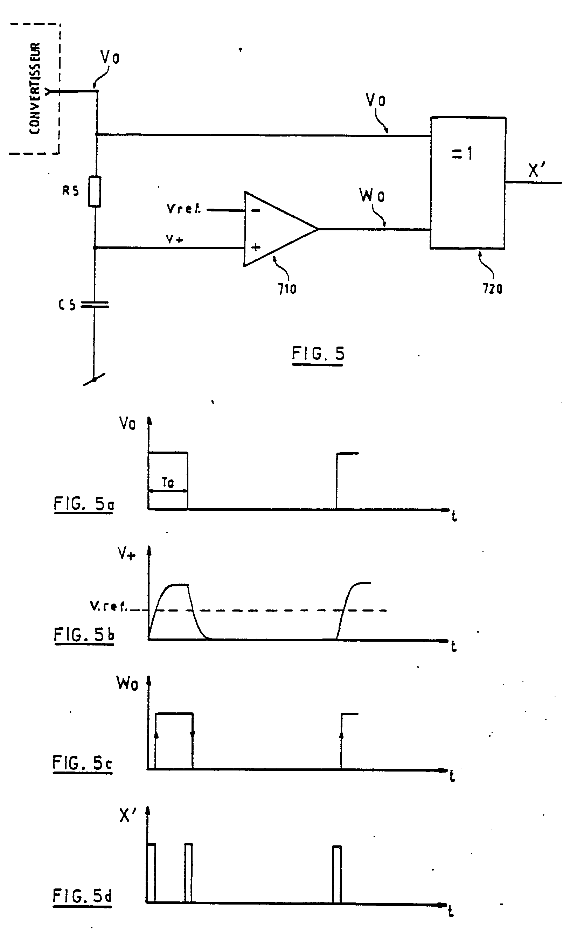

En variante, la transmission des fronts (montants et descendants) du signal impulsionnel $V_o$ délivré par le convertisseur peut se faire comme représentée par les figures 5, 5a, 5b, 5c et 5d. Le signal $V_o$ (figure 5a) est appliqué à la branche $R_5 C_5$. Le comparateur 710 reçoit en entrée inverseuse une tension de référence $V_{ref}$ et en entrée non inverseuse une tension $V_+$ dont le chronogramme est représenté à la figure 5b. Le comparateur 710 délivre un signal $W_o$ tel que représente à la figure 5c, de même forme que $V_o$ mais déphasé. Le retard du signal $W_o$ par rapport au signal $V_o$ est fonction du choix des éléments $R_5$ et $C_5$, qui doit être tel que ce retard soit notablement plus petit que la largeur $T_0$ d'une impulsion de $V_o$. Une porte "OU EXCLUSIF" 720 reçoit d'une part $V_o$ et d'autre part $W_o$ et délivre un signal $X'$ à l'état haut seulement lorsque l'un ou l'autre (mais pas les deux en même temps) des signaux $V_o$ ou $W_o$ est à l'état haut. Ce signal $X'$ se prête à la commande de moyens formant interrupteurs tels que les transistors 81 et 82.

## Revendications

1. Système d'alimentation en énergie des circuits électriques fixés à la roue (1) dans un dispositif de surveillance de pneumatiques d'un véhicule, la transmission d'energie depuis le châssis du véhicule vers la roue (1) étant réalisée par couplage inductif entre deux bobines (2) et (41), l'une (41) liée au châssis, l'autre (2) à la roue (1), le stockage de l'énergie étant réalisé par au moins un condensateur $(C)_1$ alimenté par la bobine (2) liée à la roue (1) via un redresseur ($D_1$, $D_2$, $D_3$, $D_4$), ledit condensateur $(C_1)$ alimentant en énergie lesdits circuits électriques, caractérisé en ce qu'il comporte des moyens permettant de déconnecter lesdits circuits électriques pendant la phase de transmission et de stockage d'énergie dans le condensateur $(C_1)$, depuis le châssis vers la roue (1).

2. Système d'alimentation en énergie selon la revendication 1, caractérisé en ce que lesdits moyens comprennent une branche de circuit RC à très faible constante de temps, ladite branche étant alimentée par ladite bobine (2) liée à la roue (1) via un redresseur ($D_1$, $D_2$, $D_5$, $D_6$), une branche résistive (r) permettant la décharge du condensateur de ladite branche RC, et un comparateur (61) permettant de détecter l'état de charge du condensateur (C) de ladite branche RC, ledit comparateur (61) actionnant des moyens formant interrupteur (62) pour connecter ou déconnecter lesdits circuits.

3. Système d'alimentation en énergie selon la revendication 1 ou 2, caractérisé en ce que le stockage de l'énergie est réalisé par deux condensateurs dont l'une $(C_{12})$ alimente les étages logiques desdits circuits électriques, et l'autre $(C_{11})$ alimente les parties analogiques dudit circuit.

4. Système d'alimentation en énergie selon la revendication 3, caractérisé en ce que l'écrêtage de la tension de chacun desdits deux condensateurs $(C_{11}, C_{12})$ est assuré par une diode zéner $(D_{Z1}, D_{Z2})$ utilisée également comme élément redresseur pour la charge de l'autre desdits deux condensateurs.

5. Système d'alimentation en énergie d'une bobine (12) fixée à une roue (1) dans une dispositif de surveillance de pneumatiques d'un véhicule, l'énergie électrique nécessaire étant accumulée par des moyens de stockage, le dispositif de surveillance comportant un étage convertisseur servant à la détection et au codage sous forme d'un signal impulsionnel de la valeur d'au moins une grandeur mesurée, le dispositif comportant en outre un étage de transmission dudit signal impulsionnel basé sur le couplage inductif entre deux bobines (2 et 42) fixées l'une (2) à la roue, l'autre (42) au châssis du véhicule, caractérisé en ce que l'étage de transmission comporte des moyens pour connecter lesdits moyens de stockage à la bobine (2) solidaire de la roue (1) lorsque ledit signal impulsionnel présente un front montant ou un front descendant et déconnecter lesdits moyens de stockage à tout autre moment.

6. Système d'alimentation en énergie selon la revendication 5, caractérisé en ce que lesdits moyens pour connecter comportent une porte "NON ET" (72) recevant en entrées la dérivée du signal impulsionnel et la dérivée du signal impulsionnel inversé, délivrant en sortie un signal de commande de moyens formant interrupteur (81, 82) pour connecter et déconnecter lesdits moyens de stockage.

7. Système d'alimentation en énergie selon la revendication 5, caractérisé en ce que les moyens pour connecter comportent un circuit (710, $R_5$, $C_5$) à retard délivrant ledit signal impulsionnel déphasé, et une porte "OU EXCLUSIF" (720) recevant en entrées d'une part ledit signal impulsionnel, et d'autre part ledit signal impulsionnel déphasé, et délivrant en sortie un signal de commande des moyens formant interrupteur (81, 82) pour connecter et déconnecter lesdits moyens de stockage).

8. Système d'alimentation en énergie selon l'une des revendications 5 à 7, caractérisé en ce que lesdits moyens formant interrupteur (81, 82) sont constitués par des transistors à effet de champ.

9. Système d'alimentation en énergie selon l'une des revendications 5 à 7, caractérisé en ce que lesdits moyens formant interrupteur (81, 82) sont constitués par des transistors bipolaires.

10. Système d'alimentation en énergie selon l'une des revendications 6 à 9, caractérisé en ce que lesdits moyens de stockage sont constitués par une pile.

11. Système d'alimentation en énergie selon l'une des revendications 5 à 9, caractérisé en ce que lesdits moyens de stockage sont constituées par un condensateur ($C_1$ ou $C_{11}$).

## Patentansprüche

1. Energieversorgungssystem für elektrische Schaltkreise, die an einem Rad (1) in einer Reifenüberwachungsvorrichtung eines Fahrzeuges vorgesehen sind, wobei die Übertragung der Energie vom Fahrzeugchassis zum Rad (1) durch induktive Kopplung zwischen zwei Spulen (2) und (41) erfolgt, wovon die eine (42) mit dem Chassis und die andere (2) mit dem Rad verbunden ist und wobei das Energiereservoir zumindest aus einem Kondensator ($C_1$) besteht, der von der am Rand (1) befestigten Spule (2) über einen Gleichrichter ($D_1$, $D_2$, $D_3$, $D_4$) versorgt wird, wobei der Kondensator ($C_1$) die elektrischen Schaltkreise mit Energie versorgt, dadurch gekennzeichnet, daß er Mittel aufweist, die es erlauben, die elektrischen Schaltkreise während der Phase der Energieübertragung vom Chassis zum Rad (1) und der Speicherung im Kondensator ($C_1$) zu trennen.

2. Energieversorgungssystem nach Anspruch 1, dadurch gekennzeichnet, daß die Mittel einen RC-Kreis mit sehr kleiner Zeitkonstante umfassen, wobei dieser Zweig durch die mit dem Rad (1) verbundene Spule (2) über einen Gleichrichter ($D_1$, $D_2$, $D_5$, $D_6$) versorgt wird und ein Widerstandszweig das Entladen des Kondensators des RC-Zweiges erlaubt, wobei ein Vergleicher (61) es erlaubt, den Ladezustand des Kondensators (C) des RC-Kreises festzustellen und der Vergleicher (61) Mittel betätigt, die einen Unterbrecher (62) bilden, um diese Kreise anzuschließen oder abzutrennen.

3. Energieversorgungssystem nach Anspruch 1 oder 2, dadurch gekennzeichnet, daß der Energiespeicher aus zwei Kondensatoren besteht, von denen der eine ($C_{12}$) die logischen Schaltkreise der elektrischen Schaltung versorgt und der andere ($C_{11}$) die analogen Teile dieses Kreises.

4. Energieversorgungssystem nach Anspruch 3, dadurch gekennzeichnet, daß die Glättung der Spannung jedes der beiden Kondensatoren ($C_{11}$, $C_{12}$) durch eine Zenerdiode ($D_{Z1}$, $D_{Z2}$) erfolgt, die auch als Gleichrichterelement beim Laden des anderen der beiden Kondensatoren verwendet wird.

5. Energieversorgungssystem einer mit einem Rad (1) verbundenen SPule (2) in einer Reifenüberwachungsvorrichtung eines Fahrzeuges, wobei die notwendige elektrische Energie in Speichermitteln gesammelt wird und die Überwachungsvorrichtung einen Konverterteil aufweist, der der Überwachung und dem Kodieren in Form eines impulsförmigen Signales des Wertes zumindest einer zu messenden Größe aufweist, wobei die Vorrichtung weiters einen Übertragungsteil für dieses Impulssignal, basierend auf der induktiven Kopplung zwischen zwei Spulen (2) und (42), von denen die eine (2) am Rad, die andere (42) am Fahrzeugchassis befestigt ist, aufweist, dadurch gekennzeichnet, daß der Transmissionsteil Mittel umfaßt, um die Speichermittel mit der am Rad (1) befestigten Spule (2) zu verbinden, wenn das Impulssignal eine steigende oder fallende Flanke aufweist und um die Speichermittel zu jeder anderen Zeit zu trennen.

6. Energieversorgungssystem nach Anspruch 5, dadurch gekennzeichnet, daß die Verbindungsmittel einen "NICHT UND" Eingang (72) aufweisen, der als Eingang die Ableitung des Impulssignales und die Ableitung des inversen Impulssignales erhält und am Ausgang ein Befehlsignal für Mittel liefert, die Unterbrecher (81, 82) bilden, um die Speichermittel anzuschließen oder abzutrennen.

7. Energieversorgungssystem nach Anspruch 5, dadurch gekennzeichnet, daß die Mittel zum Verbinden einen Kreis (710, $R_5$, $C_5$) umfassen, der das Impulssignal außerhalb der Phase liefert und einen "ODER EXKLUSIV" Eingang (720), der einerseits das Impulssignal und andererseits das außer Phase gebrachte Impulssignal erhält und am Ausgang ein Befehlssignal für die Mittel abgibt, die den Unterbrecher (81, 82) bilden, um die Speichermittel zu verbinden oder abzutrennen.

8. Energieversorgungssystem nach einem der Ansprüche 5 bis 7, dadurch gekennzeichnet, daß die den Unterbrecher (81, 82) bildenden Mittel aus Feldeffekttransistoren bestehen.

9. Energieversorgungssystem nach einem der Ansprüche 5 bis 7, dadurch gekennzeichnet, daß die den Unterbrecher (81, 82) bildenden Mittel aus Bipolartransistoren bestehen.

10. Energieversorgungssystem nach einem der Ansprüche 6 bis 9, dadurch gekennzeichnet, daß die Spechermittel aus einer Batterie bestehen.

11. Energieversorgungssystem nach einem der Ansprüche 5 bis 9, dadurch gekennzeichnet, daß die Speichermittel aus einem Kondensator ($C_1$ oder $C_{11}$) bestehen.

## Claims

1. A system for feeding energy to electric circuits fastened to a wheel (1) in a device for monitoring tires of a vehicle, the transmission of energy from the chassis of the vehicle to the wheel (1) being effected by inductive coupling between two coils (2 and 41), one (41) connected to the chassis and the other (2) to the wheel (1), the storage of the energy being effected by at least one condenser ($C_1$) fed by the coil (2) connected to the wheel (1) via a rectifier ($D_1$, $D_2$, $D_3$, $D_4$), the condenser ($C_1$) feeding the electric circuits with energy, characterized by the fact that the system comprises means responsive to the transmission of energy from the chassis and storage into the condenser ($C_1$) to the wheel (1) for disconnecting said electrical circuits.

2. A system for feeding energy according to claim 1, characterized by the fact that the means comprise an RC branch of very low time constant, the branch being fed by the coil (2) connected to wheel (1) via a rectifier ($D_1$, $D_2$, $D_5$, $D_6$), a resistive branch (r) permitting the discharge of the condenser of the RC branch, a comparator (61) for detecting the state of charge of the condenser (C) of the RC branch, and switch means (62) actuatable by said comparator (61) in response to the state of charge of the condenser of the RC branch for connecting or disconnecting said circuits.

3. A system for feeding energy according to claim 1 or 2, characterized by the fact that the storage of the energy is effected by two condensers one ($C_{12}$) of which feeds logic stages in the electric circuits and the other ($C_{11}$) feeds analog components of said circuits.

4. A system for feeding energy according to claim 3, characterized by the fact that zener diode means are provided for clipping the voltage of each of said two condensers ($C_{11}$, $C_{12}$) said zener ($D_{Z1}$, $D_{Z2}$) diode means also serving as a rectifying element for the discharging of at least one of said condensers.

5. A system for feeding energy to a coil (2) fastened to a wheel (1) in a device for monitoring tires of a vehicle, the electrical energy necessary being accumulated by storage means, the monitoring device having a converter stage which serves for detection and coding in the form of a pulse signal of the value of at least one measured variable, the device furthermore comprising a stage for the transmission of the pulse signal based on the inductive coupling between two coils (2 and 42), one (2) fastened to the wheel (1) and the other (42) to the chassis of the vehicle, characterized by the fact that the transmission stage comprises switching means responsive to said pulse signal for connecting the storage means to the coil (2) connected to the wheel (1) when the pulse signal has an asccending front or a descending front and disconnecting the storage means at all other times;

6. A system for feeding energy according to claim 5, characterized by the fact that the connecting means comprise a "NAND" (72) gate responsive jointly to the derivative of the pulse signal and the derivative of the inverted pulse signal, and arranged to provide at the output thereof a control signal for actuating said switching means (81, 82) to connect or disconnect the storage means.

7. A system for feeding energy according to claim 5, characterized by the fact that the connecting means comprises a delay circuit (710, $R_5$, $C_5$) delivering a representation of said pulse signal but out of phase therewith, and "EXCLUSIVE-OR" (720) gate means responsive jointly to the pulse signal and to said out of phase representation thereof providing as an output a signal for controlling said switching means (81, 82) for connecting and disconnecting the storage means.

8. A system for feeding energy according to any of claims 5 to 7, characterized by the fact that the switching means (81, 82) comprise field-effect transistors;

9. A system for feeding energy according to any of claims 5 to 7, chracterized by the fact that the switching means (81, 82) comprise two-pole transistors.

10. A system for feeding energy according to any of claims 6 to 9, characterized by the fact that the storage means comprises a battery.

11. A system for feeding energy according to any of claims 5 to 9, characterized by the fact that the storage means comprises a condenser ($C_1$ or $C_{11}$).

Fig I

EP 0 261 118 B1

FIG. 2

FIG. 2a — $V_{AB}$

FIG. 2b — $V_{CI}$

FIG. 2c — $V_C$

FIG. 2d — $V$

2

FIG.3

FIG. 4

FIG. 4a

FIG. 4b

FIG. 4c

FIG. 4d

FIG. 4e

4

CONVERTISSEUR

Vo

Vo

RS

Vref. −

V+ +

Wo

710

=1

X'

720

FIG. 5

Vo

To

FIG. 5a

t

V+

V.ref.

FIG. 5b

t

Wo

FIG. 5c

t

X'

FIG. 5d

t